# FASCICULE DE BREVET EUROPEEN

(11) **EP 3 061 260 B1**
(45) Date de publication et mention de la délivrance du brevet: **04.12.2019**
(21) Numéro de dépôt: 14824868.5
(22) Date de dépôt: 20.10.2014
(51) Int. Cl.: H04Q 1/02

(54) **CABLE RÉSEAU COMPORTANT UN DISPOSITIF DE REPÉRAGE VISUEL ET DISPOSITIF DE REPÉRAGE VISUEL D'EXTRÉMITÉ POUR CABLE RÉSEAU**
NETZWERKKABEL MIT VISUELLER MARKIERUNGSVORRICHTUNG UND VORRICHTUNG ZUR VISUELLEN MARKIERUNG DES ENDES EINES NETZWERKKABELS
NETWORK CABLE COMPRISING A VISUAL MARKING DEVICE AND A DEVICE FOR VISUAL MARKING OF THE END OF A NETWORK CABLE

(30) Priorité: 22.10.2013 FR 1360280
(43) Date de publication de la demande: 31.08.2016
(73) Titulaire: Bull SAS, 78340 Les Clayes-sous-Bois (FR)
(72) Inventeur: COHARD, Sylvain, F-38100 Grenoble (FR)
(74) Mandataire: A.P.I. Conseil
(86) Numéro de dépôt international: PCT/FR2014/052663
(87) Numéro de publication internationale: WO 2015/059393

(56) Documents cités:
- EP-A2- 1 788 825
- WO-A1-02/052583
- US-A- 5 666 453
- US-A1- 2010 210 134
- US-B1- 6 577 243

## Description

L'invention concerne câble réseau comportant un dispositif destiné au repérage visuel des extrémités dudit câble.

Le terme « câble réseau », tel qu'il est utilisé dans la présente invention se rapporte à des câbles ou cordons comportant des fils conducteurs électriques destinés à véhiculer des signaux et d'autres, de l'énergie selon la norme POE (Power Over Ethernet) ou norme IEEE 802.3af. De tels câbles sont utilisés pour du câblage électrique ou informatique dans des réseaux informatiques ou téléphoniques. Dans les applications de câblage informatique, les câbles sont constitués de fils conducteurs se présentant sous forme de paires torsadées.

L'invention concerne plus particulièrement un dispositif de repérage visuel de câble réseau, destiné à l'identification ou au repérage rapide et sans ambigüité des extrémités desdits câbles facilitant toute intervention des personnes. Ce repérage rapide est d'autant plus indispensable que les câbles constituent des ensembles de câbles connectés à des équipements disposés côte à côte et/ou superposés dans des armoires dites de « brassage » ou baies informatiques et où les de câbles sont généralement entremêlés. Un tel exemple est décrit dans le document US201 /210134, Caveney Jack et A1, publié le 19 Août 2010 Mai.

L'invention s'applique au câblage de réseaux électriques, informatiques, téléphoniques et notamment aux armoires dites de « brassage » des liaisons informatiques.

Plus particulièrement, dans le cas des armoires de brassage des liaisons informatiques, des câbles de brassage sont passés en grand nombre entre les matériels informatiques actifs et les panneaux de brassage et forment des faisceaux de câbles plus ou moins entremêlés. Il est alors très difficile de suivre sur toute sa longueur un câble, depuis l'une de ses extrémités, pour trouver son autre extrémité et ainsi faire le lien entre une prise de numéro donné du câblage distribution et un numéro de port d'un matériel actif.

Ainsi, lorsque des faisceaux de câbles sont assemblés et connectés, se pose un problème récurrent d'ordre pratique qui est celui du repérage de manière certaine à partir de la connaissance de la position d'une extrémité d'un câble, de la position de l'autre extrémité parmi tous les câbles du faisceau. Ce problème est régulièrement rencontré dans le cas des câbles/cordons de brassage informatique logés dans une armoire (coffret ou baie), mais également des « jarretières » téléphoniques, ou des câblages électriques qu'il s'agisse de fils véhiculant des signaux de données ou de câbles véhiculant de l'énergie.

Une identification par un repérage visuel facilite les opérations d'installation et de maintenance.

Il existe à ce jour plusieurs solutions qui, malheureusement, ne sont pas satisfaisantes.

Parmi les solutions connues on peut citer des solutions pour lesquelles la structure de câbles ou des connecteurs en bout de câble n'est pas modifiée. Il s'agit des techniques suivantes:
- le suivi physique et visuel par le toucher du câble mais qui s'avère très difficile lorsque les câbles sont nombreux et quasi impossible à mettre en œuvre lorsqu'ils sont entremêlés ou très serrés outre le fait que cette technique peut être longue,
- le marquage des câbles aux deux extrémités par un étiquetage. Malheureusement, cette solution ne permet d'avoir un repérage rapide de l'extrémité du câble recherché, dès lors qu'elle nécessite un examen de toutes les étiquettes jusqu'à ce que l'étiquette recherchée soit trouvée, un tel repérage étant couteux en temps et pas toujours aisé à effectuer,
- le repérage par des colorations distinctes pour chaque câble, mais cette technique s'avère présenter une limite quantitative, le nombre maximum de couleurs disponible n'étant, généralement, pas suffisant car ce nombre n'est que d'une dizaine.

D'autres solutions nécessitent des modifications pour les câbles et/ou pour les connecteurs parmi lesquelles les solutions proposées dans les documents suivants :
- Dans une variante décrite page 12, ligne 9 à 15 du document WO94019702, l'identification visuelle est réalisée au moyen d'une fibre optique. La fibre optique est insérée dans le câble et comporte une extrémité recourbée sur elle-même. Cette extrémité est utilisée pour la restitution de la lumière injectée dans la fibre optique et transmise par celle-ci. La restitution de la lumière s'effectue par éclairement de la surface du coude formé par la fibre optique. Le document ne précise pas si la fibre optique est également recourbée à son autre extrémité.
- Selon la méthode décrite dans le document US 5,463 706, proche de la précédente, une fibre optique est utilisée pour visualiser un câble ou conduit. Dans ce document, l'injection de la lumière peut se faire latéralement au niveau d'un coude formé sur une fibre optique. Ce coude est éloigné des extrémités de la fibre optique et le résultat est l'éclairement de la fibre optique sur toute la longueur.
- Le document EP1261889 décrit une méthode d'identification visuelle d'un câble ou cordon, obtenue également au moyen d'une fibre optique. La fibre optique est intégrée à la fabrication des câbles ou cordons. Ladite fibre optique est recourbée en ses deux extrémités, chaque extrémité forme un coude noyé dans le connecteur placé à l'extrémité correspondante du câble ou cordon. La méthode décrite dans ce document a le même inconvénient que dans les exemples qui précèdent, à savoir la nécessité d'une source de lumière pour injecter de la lumière à une extrémité de la fibre. En outre, l'incorporation ou l'association d'une fibre optique à des câbles augmente de façon significative le prix des câbles auquel se rajoute le prix d'un module source de lumière.
- Le document WO 2008071867 décrit également un dispositif de repérage visuel de câbles ou de conduits, selon lequel le câble ou conduit comporte un fil électroluminescent s'étendant tout le long du câble ou du conduit. Le fil électroluminescent est prévu pour être alimenté de façon temporaire de manière à visualiser le cheminement du câble ou conduit. Le dispositif comprend en outre des moyens de connexion pour l'alimentation électrique du fil électroluminescent, placés à proximité de chacune des extrémités du câble, et donc à proximité des connecteurs terminaux ou en un point intermédiaire. Ces moyens de connexion sont indépendants des connecteurs terminaux. Le fil électroluminescent est soit intégré à la fabrication du câble, soit placé à la surface. Les moyens de connexion pour l'alimentation du fil électroluminescent se présentent sous la forme d'un connecteur fixé audit câble électroluminescent et entourent le câble. Ces connecteurs d'alimentation sont prévus pour coopérer avec un injecteur d'alimentation adapté. Cette méthode présente l'inconvénient de nécessiter la mise en place de connecteurs sur le fils électroluminescent pour l'alimentation électrique dudit fil et d'un injecteur d'alimentation électrique qui est susceptible d'apporter des perturbations au signal transmis lorsque les câbles ou conduits sont des câbles électriques.
- Le document US 5, 666,453 décrit une méthode de repérage des extrémités d'un câble à fibre optique. Cette méthode consiste à équiper le câble à fibre optique de deux terminaisons comportant chacune un connecteur pour la connexion à un équipement informatique ou électronique et un connecteur d'alimentation électrique comprenant un témoin lumineux et une prise d'alimentation électrique. Le câble à fibre optique comprend en outre deux fils conducteurs électriques pour les tensions d'alimentation des témoins lumineux disposés aux deux terminaisons du câble à fibre optique, lesdites tensions d'alimentation étant appliquées au moyen d'un dispositif d'alimentation électrique branché sur l'une des prises du connecteur d'alimentation. Les témoins lumineux sont réalisés par des diodes électroluminescentes (LED).
- Le document US 6, 577,243 décrit une méthode/dispositif similaire à celle décrite dans le document US 5, 666,453, appliquée à un câble à paires torsadées. Deux fils conducteurs électriques du câble sont utilisés pour les tensions d'alimentation appliquée au moyen d'un dispositif d'alimentation électrique externe branché sur une prise d'alimentation électrique des témoins (LED) les témoins et la prise d'alimentation sont placés dans des connecteurs d'alimentation terminaux proches des connecteurs destinés à la connexion avec les équipements informatiques ou électroniques. Le principal inconvénient de ce dispositif de repérage et du précédent est qu'ils ne peuvent pas être utilisés pour les réseaux actuels c'est-à-dire pour des réseaux dont la vitesse de communication est au moins égale à 100 Mb/s selon la norme POE ou pouvant atteindre 1000 Mb/s selon la norme POE+, car dans ce cas, tous les conducteurs sont utilisés pour la communication. En effet, dans les deux solutions précédemment décrites, deux fils conducteurs sont dédiés à une alimentation externe pour pouvoir activer le dispositif de repérage. Le fonctionnement dudit dispositif de repérage perturberait la communication si, pour des besoins d'augmentation de la vitesse de communication, les fils étaient également utilisés pour véhiculer des signaux de communication.

Un autre inconvénient desdits dispositifs réside dans le fait que les terminaisons des câbles ont un volume plus important que pour un câble ordinaire. En effet, les terminaisons des câbles proches des connecteurs destinés au raccordement sur les équipements informatiques ou électroniques, sont élargies du fait de la présence d'un connecteur d'alimentation. Or, la place pour les connexions en façade des équipements est limitée, l'écartement entre connecteurs sur les équipements informatiques étant standard, ces solutions peuvent être tout simplement inenvisageables lorsqu'un grand nombre de câbles est nécessaire dans une installation. De plus ces solutions, nécessitent le branchement d'une source d'alimentation électrique externe sur le connecteur d'alimentation.

L'invention a donc pour but de remédier aux inconvénients de l'art antérieur, en proposant un dispositif de repérage visuel de câbles, permettant un repérage d'extrémité de câbles quel que soit leur nombre et leur agencement, adapté à des câbles réseaux qui permettent des vitesses de communication élevées pouvant atteindre 100 Mb/s à 1000 Mb/s et de préférence pouvant atteindre 10000 Mb/s (10Gb/s) sans perturbation du fonctionnement.

En outre, le dispositif proposé n'augmente pas l'encombrement des extrémités des câbles comme c'est le cas dans les dispositifs décrits dans les documents US 6, 577,243 et US 5, 666,453, il ne nécessite pas de connecteur spécifique d'alimentation électrique.

A cette fin, il est proposé un câble comprenant un dispositif de repérage visuel des extrémités. Le dispositif comprend en chaque extrémité, un circuit électronique comportant une diode électroluminescente LED. Un des circuits au moins comprend un interrupteur, l'interrupteur pouvant être ou non, intégré à la LED. Les circuits électroniques sont reliés au câble et agencés de sorte que l'interrupteur est apte à permettre l'alimentation électrique du circuit d'extrémité opposée, au moyen d'une alimentation réseau véhiculée par ledit câble.

Ainsi, il n'est pas nécessaire de réserver des fils conducteurs dudit câble à cet effet, c'est-à-dire à l'alimentation du dispositif de repérage. Il n'est pas nécessaire non plus de disposer d'une source d'alimentation extérieure dédiée à l'alimentation du dispositif de repérage ni d'arrêter le fonctionnement des systèmes raccordés. Le câble peut être déconnecté à une extrémité tant disque l'autre extrémité reste branchée directement par le connecteur d'extrémité à un équipement fournissant l'alimentation électrique du réseau. Ainsi, le dispositif de repérage selon l'invention peut fonctionner lorsque le câble reste connecté par l'une au moins de ses extrémités recevant l'alimentation électrique réseau et également, lorsqu'il est connecté par ses deux extrémités à des équipements réseau, sans occasionner de perturbations sur la transmission des signaux.

L'invention a plus particulièrement pour objet un câble réseau comportant des fils destinés à véhiculer une alimentation électrique réseau, principalement caractérisé en ce qu'il comporte un dispositif de repérage visuel des extrémités dudit câble, comprenant un premier circuit électronique comportant au moins une diode électroluminescente et un interrupteur et un deuxième circuit électronique comportant au moins une diode électroluminescente; les deux circuits étant reliés par une liaison conductrice; le premier desdits circuits électroniques étant relié à l'un des fils conducteurs d'alimentation réseau à une extrémité du câble, et le deuxième circuit électronique étant relié à un autre fil conducteur d'alimentation à l'extrémité opposée dudit câble, lesdits circuits électroniques étant agencés de sorte que l'activation de l'interrupteur, permet à l'alimentation réseau, d'alimenter au moins la diode électroluminescente du circuit électronique d'extrémité opposée.

Selon d'autres caractéristique:
- au moins un des circuits électroniques comporte un circuit de déclenchement de l'alimentation électrique réseau susceptible d'être véhiculée par le câble,
- les circuits électroniques sont reliés par la liaison conductrice de sorte que les diodes LEDs sont connectées en série, l'activation de l'interrupteur permettant le passage du courant d'alimentation et l'éclairage des deux diodes,
- le premier et le deuxième circuit électronique comportent un interrupteur, ces interrupteurs sont connectés aux diodes LEDs et permettent par l'activation de l'un ou de l'autre, leur alimentation ; l'arrêt de l'alimentation étant obtenu par désactivation de l'interrupteur activé.
- le premier et le deuxième circuit électronique comportent un interrupteur, ces interrupteurs sont connectés aux diodes LEDs pour permettre un fonctionnement en va et vient, leur alimentation étant obtenue par l'activation de l'un ou de l'autre, et l'arrêt de l'alimentation étant obtenu par désactivation de l'un quelconque desdits interrupteurs,
- les circuits électroniques sont incorporés au câble ou, avantageusement, dans les connecteurs du câble,
- le circuit de déclenchement de l'alimentation réseau est moulé dans un connecteur du câble,
- le câble est un câble à paire torsadées muni de prises RJ45 dont l'une est destinée à être reliée à un équipement d'alimentation de type commutateur répondant à la norme POE,
- le dispositif de repérage est relié aux conducteurs d'alimentation réseau n°4 et/ ou 5 (DC-) et n°6 et/ ou 7 (DC+) du câble,
- la liaison conductrice reliant les deux circuits électroniques est logée dans le câble,
   la liaison conductrice reliant les deux circuits est logée dans une gaine accolée au câble,
- avantageusement, la liaison conductrice comporte deux ou trois fils conducteurs,
- le câble est un câble réseaux informatique ou téléphonique,
- ledit câble est un câble de brassage destiné à une baie de brassage informatique.

L'invention a également pour objet un dispositif de repérage visuel des extrémités d'un câble réseau comportant des fils conducteurs destinés à véhiculer une alimentation électrique réseau, principalement caractérisé en ce que ledit dispositif comprend au moins un premier circuit électronique comportant au moins une diode électroluminescente et un interrupteur et un deuxième circuit électronique comportant au moins une diode électroluminescente; les deux circuits étant reliés par une liaison conductrice; le premier desdits circuits électroniques étant relié à l'un des fils conducteurs d'alimentation réseau à une extrémité du câble, et le deuxième circuit électronique étant relié à un autre fil conducteur d'alimentation à l'extrémité opposée dudit câble, lesdits circuits électroniques étant agencés de sorte que l'activation de l'interrupteur, permet à l'alimentation réseau, d'alimenter au moins la diode électroluminescente du circuit électronique d'extrémité opposée.

Avantageusement au moins un des circuits électroniques comporte un circuit à déclenchement de l'alimentation électrique réseau susceptible d'être véhiculée par le câble.

D'autres particularités et avantages de l'invention apparaitront à la lecture de la description suivante faite à titre d'exemple illustratif et non limitatif, en référence aux Figures annexées qui représentent :
La figure 1, un schéma d'un câble comprenant un dispositif de repérage visuel selon l'invention,
La figure 2, un schéma de réalisation du dispositif de repérage selon un premier mode de réalisation de l'invention,
La figure 3, un schéma de réalisation du dispositif de repérage selon un deuxième mode de réalisation de l'invention,
La figure 4, un schéma illustrant un exemple d'implantation du dispositif de repérage.

L'invention s'applique avantageusement aux liaisons réseau Ethernet et utilise avantageusement les tensions d'alimentation qui permettent d'alimenter des équipements du réseau selon la norme POE (Power over Ethernet) ou norme IEEE 802.3af.

Il est rappelé que la norme POE (Power Over Ethernet) permet de faire passer une tension de 48 V (de 12 W de puissance et au plus 15,4 W) en plus des données à 100 Mbit/s ou 1 Gbit/s. En effet la norme POE est relative au réseau dit Fast Ethernet capable de transférer des données à une vitesse de 100 Mbits/s ainsi qu'au réseau dit Gigabit Ethernet capable de transférer des données à une vitesse de 1000 Mbits/s (Gbits/s) et qu'au réseau 10 Gigabit Ethernet, norme de dernière génération POE+; capable de délivrer un débit de 10 Gbits/s (10 000 Mbits/s).

Dans l'exemple de réalisation donné, le terme « câble » s'applique aux câbles à paires torsadées pouvant être utilisés dans les réseaux informatiques ou téléphoniques et notamment aux câbles à paires torsadées utilisés pour les réseaux Ethernet que l'on désigne par câbles Cat-5 pour la norme POE , Cat- 5e pour la norme POE+ et Cat-6a ou Cat-7 pour la dernière génération. Un câble à paires torsadées est constitué de huit fils formant quatre paires de fils de cuivre torsadés. Ces câbles sont équipés de prises ou connecteur de type RJ-45. La longueur de câble maximale d'une paire torsadée est classiquement de 100 m.

Un tel câble est muni à chaque extrémité d'un connecteur réseau de type RJ-45. Un premier connecteur est destiné à être connecté à un équipement d'alimentation réseau PSE (Power Sourcing Equipment) tel qu'un commutateur ou concentrateur « switch » compatible POE.

Par «diode électroluminescente» ou LED, il faut comprendre un circuit électronique à LED comportant au moins une diode LED, et éventuellement un interrupteur intégré. On parlera dans la suite indifféremment de circuit à LED ou de diode LED.

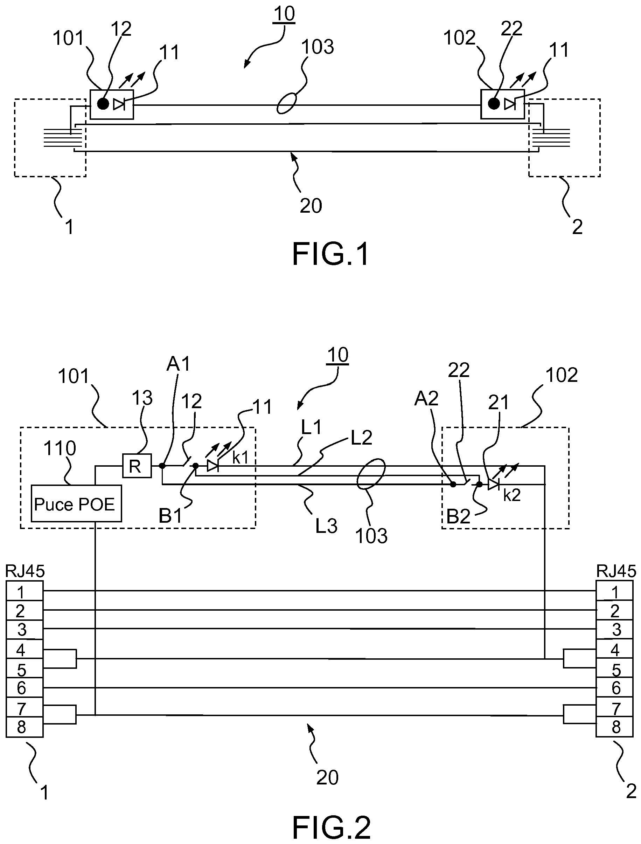

La description qui suit est faite en référence à la figure 1. Le câble 20 comporte en chacune de ces extrémités, un connecteur référencé 1, 2 sur les schémas. Ces connecteurs sont des connecteurs RJ-45 ou équivalents. Selon l'invention, le câble comporte un dispositif de repérage visuel 10. Ce dispositif de repérage visuel 10 comporte un premier circuit électronique 101 à une extrémité, et un circuit électronique 102 à l'autre extrémité. Les deux circuits électroniques 101 et 102 sont reliés par une liaison conductrice 103. La liaison conductrice 103 est préférentiellement logée dans le câble. Elle pourra également être logée dans une gaine accolée au câble. Les circuits électroniques 101, 102 comportent au moins chacun une diode LED 11, 21 et au moins un des circuits comporte un interrupteur 12. De préférence, le circuit 102 comporte également un interrupteur 22. La présence d'un interrupteur dans les deux circuits n'est pas obligatoire. Cependant, dans les exemples de réalisation illustrés sur les figures 1 et 2, chaque circuit électronique 101 et 102, comporte avantageusement un interrupteur. Ainsi, vis-à-vis des intervenants, les extrémités des câbles sont visuellement identiques. Le dispositif de repérage visuel 10 peut, ainsi, être activable indifféremment par l'une quelconque des extrémités du câble.

L'interrupteur 12 ou 22 peut être intégré à la diode électroluminescente correspondante, ou non. Avantageusement, on utilisera un circuit à diode comportant un interrupteur intégré.

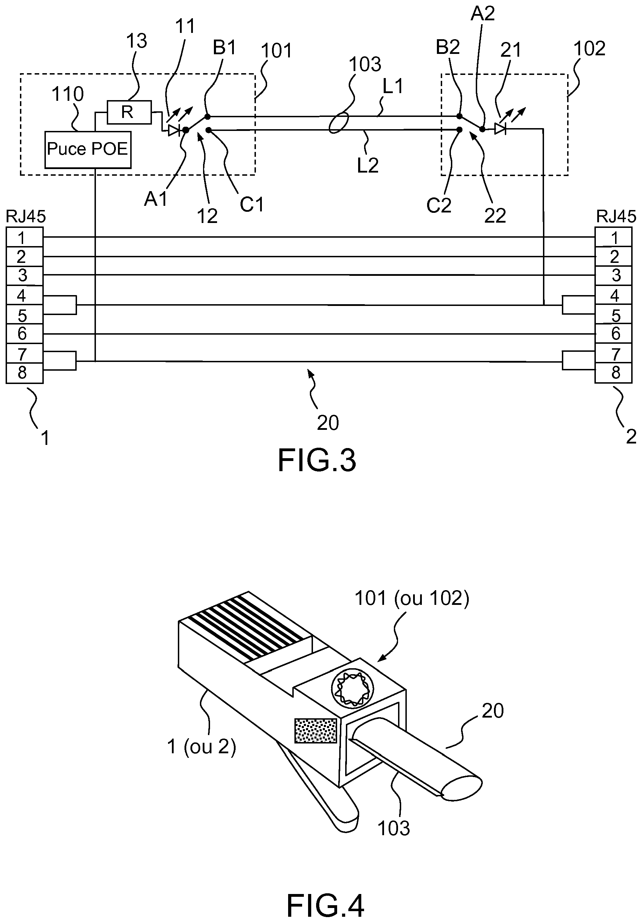

Les circuits 101, 102 sont agencés de sorte que sur activation volontaire d'un intervenant (fermeture d'un interrupteur), cela provoque l'éclairage d'au moins la diode LED située à l'extrémité opposée. Dans les exemples de réalisation représentés sur les figures 2 et 3, l'agencement des deux circuits permet, l'éclairage des deux diodes LED. Ainsi, lorsqu'un circuit est activé à une extrémité, la diode LED présente à cette même extrémité s'éclaire, et la diode LED présente à l'autre extrémité s'éclaire également. Le repérage des extrémités du câble peut ainsi être fait aisément.

La figure 2 représente un exemple d'une réalisation qui permet d'alimenter les diodes après fermeture d'un interrupteur même si le câble n'est pas branché à un équipement sollicitant de l'alimentation réseau. Dans cet exemple, le circuit de repérage visuel 10 comporte à une première extrémité correspondant à l'extrémité reliée au connecteur 1, le circuit électronique 101 et à l'extrémité reliée au connecteur 2, le circuit électronique 102. Le circuit électronique 101 comporte, la diode LED 11, un interrupteur 12, et un circuit 110 de déclenchement d'alimentation électrique réseau via le câble. Le circuit électronique 102 comporte un interrupteur 22 et la diode LED 21. Le circuit de déclenchement d'alimentation électrique 110 permet d'activer le mode alimentation réseau via le câble et ainsi, l'alimentation des diodes LED par l'action volontaire d'un intervenant appuyant sur un interrupteur.

Avantageusement, un seul des circuits électroniques comporte le circuit de déclenchement d'alimentation électrique 110, dans le cas d'espèce, c'est le circuit 101. Le circuit de déclenchement 110 est réalisé par un circuit intégré, comme par exemple un circuit LM5071 de Texas Instrument, apte à activer le mode alimentation électrique réseau Ethernet (POE) d'un équipement actif sur lequel est susceptible d'être connecté le câble. L'activation du mode alimentation électrique réseau Ethernet provoque l'alimentation électrique de la diode LED 11 en série avec l'interrupteur 12 fermé par un intervenant et dans cet exemple, l'alimentation des deux diodes LED 11 et 12 en série. Ainsi, la diode LED ou les diodes en série avec l'interrupteur fermé, s'éclairent. L'activation de l'interrupteur d'un circuit électronique 101 ou 102 permet de provoquer l'alimentation électrique de la LED du circuit à l'extrémité opposée du câble et, en pratique, l'alimentation des deux LED. Réciproquement, la désactivation de l'interrupteur qui a été activé provoque l'arrêt de l'alimentation électrique des LED. Ainsi les LED s'éclairent ou s'éteignent par activation d'un interrupteur d'un des circuits électroniques 101 ou 102 et s'éteignent par désactivation de ce même interrupteur.

Le circuit de déclenchement de l'alimentation 110 est réalisé avantageusement par une puce de circuit intégré POE généralement présente sur les équipements requérant une alimentation via une liaison Ethernet comme c'est le cas par exemple en téléphonie IP. La fonction utilisée pour détecter le besoin en alimentation électrique d'un équipement branché à l'autre extrémité d'un câble réseau, par équipement réseau susceptible de fournir une alimentation électrique est, la mesure de l'impédance du câble. La présence du circuit intégré 110 (la puce POE) dans le dispositif de repérage 10, permet de simuler, lorsqu'un interrupteur du dispositif de repérage est fermé, la présence d'un équipement nécessitant une alimentation électrique réseau et le niveau de tension requis. Quand un interrupteur est fermé, l'impédance du câble est modifiée par la présence du circuit de déclenchement 110, et présente une valeur correspondant à la norme précitée et ainsi, déclenche l'alimentation réseau POE par le câble. Cette alimentation est fournie par un équipement alimentant (non représenté) auquel le câble est branché. Quand l'interrupteur est ouvert l'impédance est infinie, le dispositif de repérage 10 n'est pas alimenté.

Les circuits électroniques 102 et 102 sont reliés par des fils L1, L2, L3 formant la liaison 103, de sorte que, l'activation d'un des interrupteurs 12 ou 22 permet, au moyen de l'alimentation réseau véhiculée par ledit câble, d'alimenter les diodes électroluminescentes des circuits d'extrémité opposées et par conséquent l'éclairage desdites diodes électroluminescentes. La borne A1 de l'interrupteur 12 est reliée par le fil L3, à la borne A2 de l'interrupteur 22 et la borne B1 de l'interrupteur 12 est reliée par le fil L2 à la borne B2 de l'interrupteur 22. La borne B1 est reliée à l'anode de la diode LED 11 et let à la borne B2 elle-même connectée à l'anode de la diode 21. Les cathodes K1, K2 des diodes 11 et 22 sont reliées par le fil L1, à un fil d'alimentation électrique réseau du câble DC- . Le circuit intégré POE est connecté à un fil d'alimentation électrique DC+ et une résistance 13 de protection des diodes 11 et 21.

Dans l'exemple de réalisation représenté sur la figure 3, la connexion du circuit de déclenchement 110 est inchangée par rapport à l'exemple précédent. La liaison 103 entre les deux circuits électroniques 101 et 102 comporte deux fils L1 et L2. Les interrupteurs 12 et 22 ont leurs contacts dans des positions inversées lorsqu'ils sont désactivés (position de repos). Sur le schéma, l'interrupteur 11 a été activé et se trouve en position haute, le contact est en B1 sur le fil L1 et l'interrupteur 22 est désactivé, le contact est en position B2 sur le fil L1. Le fil L2 relie les contacts C1 et C2 des interrupteurs. La diode électroluminescente 11 est connectée entre le fil d'alimentation et l'interrupteur 12, sa cathode étant connectée au point A1 du contact de l'interrupteur 12. La diode électroluminescente 21 est connectée après l'interrupteur 22, son anode étant connectée au point A2 du contact de l'interrupteur et sa cathode étant reliée au fil d'alimentation. Ainsi, par action sur l'interrupteur 22, passage de la position B2 à la position C2, l'alimentation des diodes électroluminescentes est arrêtée. Avec cet exemple de réalisation, l'alimentation des diodes électroluminescentes peut être activée par l'un des interrupteurs et désactivée par l'un quelconque des interrupteurs. Les circuits 101 et 102 forment un va et vient. La fonction de circuit de déclenchement 110 est la même que dans l'exemple précédent.

Dans ces exemples de réalisation, le câble 20 est un câble RJ45, le circuit 110 de déclenchement de l'alimentation réseau pour alimenter les diodes LEDs est relié à deux fils conducteurs sur les huit fils conducteurs du câble compatibles avec la norme POE ou POE+, afin d'obtenir l'intensité électrique suffisante à l'alimentation des circuits à LED. Il s'agit, dans l'exemple, des fils conducteurs d'alimentation n°5 (DC-) et n°7 (DC+) du câble. L'ativation d'un des deux interrupteurs sur le câble entraine l'allumage des deux LEDs.

Dans tous les cas, par simple activation de l'interrupteur accessible à un intervenant, l'intervenant peut visualiser l'autre extrémité du câble.

De préférence le circuit de déclenchement 110 permet d'alimenter les LEDs à partir du moment où une seule des deux extrémités du câble est connectée sur un équipement alimentant PSE (Power Source Equipment) compatible POE ou POE+.

Avantageusement, l'activation de l'alimentation réseau Ethernet POE+ est réalisée comme suit:
- La séquence de mise sous tension respecte un schéma spécifique répondant à la norme POE à savoir :
- L'équipement alimentant PSE détecte la connexion de l'appareil alimenté PD (Power source Device) en mesurant l'impédance du câble (signature).
- Si l'impédance est entre 23.75 KΩ et 26.25 KΩ, le PSE considère qu'un appareil à alimenter (PD) est présent, dans le cas d'espèce, il s'agit du dispositif de repérage 10, lorsqu' un des interrupteurs est fermé,
- L'équipement PSE active ainsi le POE+ et alimente en courant continu le dispositif de repérage détecté par la présence du circuit de déclenchement d'alimentation 110. Le dispositif de repérage 10 est détecté dès l'activation d'un des interrupteurs.

La procédure de fonctionnement est la suivante :
- Etat 0 : le dispositif sur le câble n'est pas sous tension et les LEDs ne sont pas allumées.
- Etat1 : l'intervenant active le dispositif de repérage à l'une des deux extrémités en appuyant sur l'interrupteur.
- Pour que le dispositif active les deux LEDs, le câble doit être connecté sur l'équipement alimentant compatible POE ou POE+, à savoir soit un concentrateur soit un adaptateur POE, également désigné par « switch ».
- Si le câble n'est pas connecté à un switch, le dispositif n'est pas alimenté.
- Etat 2 : Les deux LEDs s'allument,
- L'intervenant repère facilement l'autre extrémité du câble grâce à la LED allumée. Cette extrémité peut être connectée ou non à un équipement informatique (autre switch, ordinateur, imprimante, ...)
- Etat 3 : l'intervenant éteint les LEDs en désactivant l'interrupteur pour l'ouvrir.

Le schéma de la figure 4 illustre un mode de réalisation selon lequel, les circuits 101 ou 102 sont logés dans les connecteurs 1, 2. Le circuit 110 de déclenchement de l'alimentation réseau, peut avantageusement, être moulé dans un connecteur.

Le câble proposé selon l'invention comporte un dispositif de repérage des extrémités, fiable, ne perturbant pas les signaux transmis. En outre, le fonctionnement du dispositif ne nécessite pas d'alimentation externe ni de connecteur supplémentaire.

## Revendications

1. Câble réseau (20) comportant des fils destinés à véhiculer une alimentation électrique réseau, et comportant un dispositif de repérage visuel (10) des extrémités dudit câble, ledit dispositif comprenant un premier circuit électronique (101) comportant au moins une diode électroluminescente (11) et un interrupteur (12) et un deuxième circuit électronique (102) comportant au moins une diode électroluminescente (21); ou les deux circuits (101, 102) sont reliés par une liaison conductrice (103); ladite liaison conductrice (103) comprenant deux ou trois fils conducteurs, **caractérisé en ce que** le premier desdits circuits électroniques étant relié à un premier fil conducteur d'alimentation réseau à une extrémité du câble, et le deuxième circuit électronique étant relié à un deuxième fil conducteur d'alimentation à l'extrémité opposée dudit câble, lesdits circuits électroniques (101, 102) étant agencés de sorte que l'activation de l'interrupteur, permet d'activer l'alimentation réseau et d'alimenter la diode électroluminescente du deuxième circuit électronique d'extrémité opposée, et **en ce que** au moins un des circuits électroniques comprend un circuit à déclenchement (110) de l'alimentation électrique réseau susceptible d'être véhiculée par le câble, ledit circuit à déclenchement de l'alimentation électrique réseau étant une puce de circuit intégré POE, Power Over Ethernet, apte à activer le mode d'alimentation électrique réseau Ethernet d'un équipement actif sur lequel est susceptible d'être connecté le câble, et les fils conducteurs d'alimentation réseau dudit câble véhiculant l'alimentation réseau pour alimenter un équipement réseau selon la norme POE ou norme IEEE 802.3af.

2. Câble réseau (20), selon la revendication 1, **caractérisé en ce que** les circuits électroniques (101, 102) sont reliés par la liaison conductrice (103) de sorte que les diodes LEDs sont connectées en série, l'activation de l'interrupteur permettant le passage du courant d'alimentation et l'éclairage des deux diodes.

3. Câble réseau, selon l'une quelconque des revendications précédentes, caractérisé en ce le deuxième circuit électronique comporte un interrupteur (22), les interrupteurs (12, 22) sont connectés aux diodes LEDs et permettent par activation de l'un ou de l'autre, l'alimentation desdites diodes; l'arrêt de l'alimentation étant obtenu par désactivation de l'interrupteur activé.

4. Câble réseau, selon l'une quelconque des revendications 1 à 2, **caractérisé en ce que** le deuxième circuit électronique comporte un interrupteur (22), les interrupteurs (12, 22) sont connectés aux diodes LEDs pour permettre un fonctionnement en va et vient, leur alimentation étant obtenue par l'activation de l'un ou de l'autre, et l'arrêt de l'alimentation étant obtenu par désactivation de l'un quelconque desdits interrupteurs,

5. Câble réseau, selon l'une quelconque des revendications précédentes, caractérisé en ce les circuits électroniques (101, 102) sont incorporés au câble ou, avantageusement, dans les connecteurs du câble.

6. Câble réseau selon les revendications 1 et 5, **caractérisé en ce que** le circuit (110) de déclenchement de l'alimentation réseau est moulé dans un connecteur (1, 2) du câble.

7. Câble réseau selon l'une quelconque des revendications précédentes, **caractérisé en ce que** le câble est un câble à paire torsadées, muni de prises RJ45 dont l'une est destinée à être reliée à un équipement d'alimentation de type commutateur répondant à la norme POE.

8. Câble réseau selon la revendication 7, **caractérisé en ce que** le dispositif de repérage est relié aux fils conducteurs d'alimentation réseau n°4 et/ ou 5 (DC-) et n°6 et/ ou 7 (DC+) du câble.

9. Câble réseau selon l'une quelconque des revendications précédentes, **caractérisé en ce que** la liaison conductrice (103) reliant les premier et deuxième circuits électroniques est logée dans le câble.

10. Câble réseau selon l'une quelconque des revendications précédentes, **caractérisé en ce que** la liaison conductrice (103) reliant les premier et deuxième circuits est logée dans une gaine accolée au câble.

11. Câble réseau selon l'une quelconque des revendications précédentes, **caractérisé en ce que** le câble (20) est un câble réseaux informatique ou téléphonique.

12. Câble réseau selon l'une quelconque des revendications précédentes, **caractérisé en ce que** ledit câble est un câble de brassage destiné à une baie de brassage informatique.

13. Armoire de brassage, **caractérisé en ce qu'**elle comprend des liaisons informatiques réalisées avec des câbles réseau comportant un dispositif de repérage visuel des extrémités, selon l'une quelconque des revendications 1 à 11.

14. Dispositif de repérage visuel (10) des extrémités d'un câble réseau comportant des fils destinés à véhiculer une alimentation électrique réseau, et comprenant au moins un premier circuit électronique (101) comportant au moins une diode électroluminescente et un interrupteur et un deuxième circuit électronique (102) comportant au moins une diode électroluminescente; ou les deux circuits étant reliés par une liaison conductrice; ladite liaison conductrice (103) comprenant deux ou trois fils conducteurs, **caractérisé en ce que** le premier desdits circuits électroniques étant relié à un premier fil conducteur d'alimentation réseau à une extrémité du câble, et le deuxième circuit électronique étant relié à un deuxième fil conducteur d'alimentation à l'extrémité opposée dudit câble, lesdits circuits électroniques étant agencés de sorte que l'activation de l'interrupteur, permet d'activer l'alimentation réseau et d'alimenter la diode électroluminescente du deuxième circuit électronique d'extrémité opposée, et **en ce que** au moins un des circuits électroniques comprend un circuit à déclenchement (110) de l'alimentation électrique réseau susceptible d'être véhiculée par le câble, ledit circuit à déclenchement de l'alimentation électrique réseau étant une puce de circuit intégré POE, Power Over Ethernet, apte à activer le mode d'alimentation électrique réseau Ethernet d'un équipement actif sur lequel est susceptible d'être connecté le câble, et les fils conducteurs d'alimentation réseau dudit câble véhiculant l'alimentation réseau pour alimenter un équipement réseau selon la norme POE ou norme IEEE 802.3af.

## Patentansprüche

1. Netzwerkkabel (20) umfassend Leitungsdrähte, die dafür bestimmt sind, einen Netzstrom zu transportieren, und eine Vorrichtung zur optischen Markierung (10) der Enden des Kabels, wobei die Vorrichtung eine erste elektronische Schaltung (101) mit mindestens einer Leuchtdiode (11) und einem Schalter (12) und eine zweite elektronische Schaltung (102) mit mindestens einer Leuchtdiode (21) umfasst;
wobei die beiden Schaltungen (101, 102) durch eine leitende Verbindung (103) verbunden sind; wobei die leitende Verbindung (103) zwei oder drei Leitungsdrähte umfasst,
**dadurch gekennzeichnet, dass**
die erste der elektronischen Schaltungen mit einem ersten Stromnetz-Leitungsdraht an einem Ende des Kabels verbunden ist und die zweite elektronische Schaltung mit einem zweiten Stromnetz-Leitungsdraht am entgegengesetzten Ende des Kabels verbunden ist, wobei die elektronischen Schaltungen (101, 102) so angeordnet sind, dass es die Aktivierung des Schalters ermöglicht, das Stromnetz zu aktivieren und die Leuchtdiode der zweiten elektronischen Schaltung am entgegengesetzten Ende zu versorgen, und dass zumindest eine der elektronischen Schaltungen eine Schaltung zur Auslösung (110) des Netzstroms umfasst, der durch das Kabel transportiert werden kann, wobei die Schaltung zur Auslösung des Netzstroms ein Chip mit integrierter Schaltung für POE, Power Over Ethernet, ist, der fähig ist, den Ethernet-Stromnetz-Modus einer aktiven Ausrüstung zu aktivieren, an die das Kabel angeschlossen werden kann, und wobei die Stromnetz-Leitungsdrähte des Kabels den Netzstrom transportieren, um eine Netzwerkausrüstung entsprechend dem POE-Standard oder der Norm IEEE 802.3af zu versorgen.

2. Netzwerkkabel (20) nach Anspruch 1, **dadurch gekennzeichnet, dass** die elektronischen Schaltungen (101, 102) durch die leitende Verbindung (103) so verbunden sind, dass die Leuchtdioden in Reihe geschaltet sind, wobei die Schalterbetätigung das Fließen des Versorgungsstroms und das Leuchten der beiden Dioden ermöglicht.

3. Netzwerkkabel nach einem der vorstehenden Ansprüche, **dadurch gekennzeichnet, dass** die zweite elektronische Schaltung einen Schalter (22) umfasst und die Schalter (12, 22) mit den beiden Leuchtdioden verbunden sind und durch die Aktivierung des einen oder des anderen die Versorgung der Dioden ermöglichen; wobei das Abschalten der Versorgung durch die Deaktivierung des aktivierten Schalters erzielt wird.

4. Netzwerkkabel nach einem der vorstehenden Ansprüche 1 bis 2, **dadurch gekennzeichnet, dass** die zweite elektronische Schaltung einen Schalter (22) umfasst und die Schalter (12, 22) derart mit den beiden Leuchtdioden verbunden sind, dass sie einen Wechselbetrieb ermöglichen, wobei ihre Versorgung durch die Aktivierung des einen oder des anderen erzielt wird und das Abschalten der Versorgung durch die Deaktivierung eines beliebigen der Schalter erzielt wird.

5. Netzwerkkabel nach einem der vorstehenden Ansprüche, **dadurch gekennzeichnet, dass** die elektronischen Schaltungen (101, 102) in das Kabel oder vorzugsweise in die Stecker des Kabels integriert sind.

6. Netzwerkkabel nach den Ansprüchen 1 und 5, **dadurch gekennzeichnet, dass** die Schaltung zur Auslösung (110) des Stromnetzes in einem Stecker (1, 2) des Kabels ausgebildet ist.

7. Netzwerkkabel nach einem der vorstehenden Ansprüche, **dadurch gekennzeichnet, dass** das Kabel ein Kabel mit verdrilltem Paar versehen mit RJ45-Anschlüssen ist, von denen einer dafür bestimmt ist, an eine schaltende Versorgungseinrichtung angeschlossen zu werden, die dem POE-Standard entspricht.

8. Netzwerkkabel nach Anspruch 7, **dadurch gekennzeichnet, dass** die Markierungseinrichtung mit den Stromnetz-Leitungsdrähten Nr. 4 und/oder 5 (DC-) und Nr. 6 und/oder 7 (DC+) des Kabels verbunden ist.

9. Netzwerkkabel nach einem der vorstehenden Ansprüche, **dadurch gekennzeichnet, dass** die leitende Verbindung (103), die die erste und die zweite elektronische Schaltung verbindet, in dem Kabel untergebracht ist.

10. Netzwerkkabel nach einem der vorstehenden Ansprüche, **dadurch gekennzeichnet, dass** die leitende Verbindung (103), die die erste und die zweite elektronische Schaltung verbindet, in einer an das Kabel angrenzenden Hülle untergebracht ist.

11. Netzwerkkabel nach einem der vorstehenden Ansprüche, **dadurch gekennzeichnet, dass** das Kabel (20) ein Computer- oder Telefon-Netzwerkkabel ist.

12. Netzwerkkabel nach einem der vorstehenden Ansprüche, **dadurch gekennzeichnet, dass** das Kabel ein für einen Computer-Netzwerkschrank bestimmtes Patchkabel ist.

13. Netzwerkschrank, **dadurch gekennzeichnet, dass** er Computerverbindungen umfasst, die mit Netzwerkkabeln mit einer Vorrichtung zur optischen Markierung der Enden nach einem der Ansprüche 1 bis 11 hergestellt werden.

14. Vorrichtung zur optischen Markierung (10) der Enden eines Netzwerkkabels mit Leitungsdrähten, die dafür bestimmt sind, einen Netzstrom zu transportieren, und umfassend mindestens eine erste elektronische Schaltung (101) mit mindestens einer Leuchtdiode und einem Schalter und eine zweite elektronische Schaltung (102) mit mindestens einer Leuchtdiode;
wobei die beiden Schaltungen durch eine leitende Verbindung (103) verbunden sind; wobei die leitende Verbindung zwei oder drei Leitungsdrähte umfasst,
**dadurch gekennzeichnet, dass**
die erste der elektronischen Schaltungen mit einem ersten Stromnetz-Leitungsdraht an einem Ende des Kabels verbunden ist und die zweite elektronische Schaltung mit einem zweiten Stromnetz-Leitungsdraht am entgegengesetzten Ende des Kabels verbunden ist, wobei die elektronischen Schaltungen so angeordnet sind, dass es die Aktivierung des Schalters ermöglicht, das Stromnetz zu aktivieren und die Leuchtdiode der zweiten elektronischen Schaltung am entgegengesetzten Ende zu versorgen, und dass zumindest eine der elektronischen Schaltungen eine Schaltung zur Auslösung (110) des Netzstroms umfasst, der durch das Kabel übertragen werden kann, wobei die Schaltung zur Auslösung des Netzstroms ein Chip mit integrierter Schaltung für POE, Power Over Ethernet, ist, der fähig ist, den Ethernet-Stromnetz-Modus einer aktiven Ausrüstung zu aktivieren, an die das Kabel angeschlossen werden kann, und wobei die Stromnetz-Leitungsdrähte des Kabels den Netzstrom transportieren, um eine Netzwerkausrüstung entsprechend dem POE-Standard oder der Norm IEEE 802.3af zu versorgen.

## Claims

1. A network cable (20) including wires intended to convey a network power supply, and including a device for visually marking (10) the ends of said cable, said device comprising a first electronic circuit (101) including at least one light-emitting diode (11) and a switch (12) and a second electronic circuit (102) including at least one light-emitting diode (21); where
the two circuits (101, 102) are connected by a conductive link (103); said conductive link (103) comprising two or three conductive wires,
**characterized in that**
the first one of said electronic circuits is connected to a first network supply conductive wire at one end of the cable, and the second electronic circuit is connected to a second supply conductive wire at the opposite end of said cable, said electronic circuits (101, 102) being arranged so that the activation of the switch allows activating the network supply and powering the light-emitting diode of the second opposite-end electronic circuit, and **in that** at least one of the electronic circuits comprises a trigger circuit (110) of the network power supply likely to be conveyed by the cable, said trigger circuit of the network power supply being an integrated circuit chip POE, Power Over Ethernet, able to activate the Ethernet network power supply mode of an active equipment on which the cable is likely to be connected, and the network supply conductive wires of said cable conveying the network supply to power a network equipment according to the POE standard or IEEE 802.3af standard.

2. The network cable (20) according to claim 1, **characterized in that** the electronic circuits (101, 102) are connected by the conductive link (103) so that the diodes LEDs are connected in series, the activation of the switch allowing the passage of the supply current and the lighting of the two diodes.

3. The network cable according to any one of the preceding claims, **characterized in that** the second electronic circuit includes a switch (22), the switches (12, 22) are connected to the diodes LEDs and allow by activation of one or the other, the supply of said diodes; the stoppage of the supply being achieved by deactivation of the activated switch.

4. The network cable according to any one of claims 1 to 2, **characterized in that** the second electronic circuit includes a switch (22), the switches (12, 22) are connected to the diodes LEDs to enable a reciprocating operation, their supply being achieved by activation of one or the other, and the stoppage of the supply being achieved by deactivation of any one of said switches.

5. The network cable according to any one of the preceding claims, **characterized in that** the electronic circuits (101, 102) are incorporated to the cable or, advantageously, in the connectors of the cable.

6. The network cable according to claims 1 and 5, **characterized in that** the circuit (110) for triggering the network supply is molded into a connector (1, 2) of the cable.

7. The network cable according to any one of the preceding claims, **characterized in that** the cable is a twisted-pair cable, provided with RJ45 sockets, one of which being intended to be connected to a switch-type supply equipment meeting the POE standard.

8. The network cable according to Claim 7, **characterized in that** the marking device is connected to the network supply conductive wires No. 4 and/or 5 (DC-) and No. 6 and/or 7 (DC+) of the cable.

9. The network cable according to any one of the preceding claims, **characterized in that** the conductive link (103) connecting the first and second electronic circuits is housed in the cable.

10. The network cable according to any one of the preceding claims, **characterized in that** the conductive link (103) connecting the first and second circuits is housed in a sheath contiguous to the cable.

11. The network cable according to any one of the preceding claims, **characterized in that** the cable (20) is a computer or telephone network cable.

12. The network cable according to any one of the preceding claims, **characterized in that** said cable is a patch cable for a computer patch bay.

13. A patch cabinet, **characterized in that** it comprises computer links made with network cables including a device for visually marking the ends, according to any one of claims 1 to 11.

14. A device for visually marking (10) the ends of a network cable including wires intended to convey a network power supply, and comprising at least a first electronic circuit (101) including at least one light-emitting diode and a switch and a second electronic circuit (102) including at least one light-emitting diode; where
the two circuits are connected by a conductive link; said conductive link (103) comprising two or three conductive wires,
**characterized in that**
the first one of said electronic circuits is connected to a first network supply conductive wire at one end of the cable, and the second electronic circuit is connected to a second supply conductive wire at the opposite end of said cable, said electronic circuits being arranged so that the activation of the switch allows activating the network supply and powering the light-emitting diode of the second opposite-end electronic circuit, and **in that** at least one of the electronic circuits comprises a trigger circuit (110) of the network power supply likely to be conveyed by the cable, said trigger circuit of the network power supply being an integrated circuit chip POE, Power Over Ethernet, able to activate the Ethernet network power supply mode of an active equipment on which the cable is likely to be connected, and the network supply conductive wires of said cable conveying the network supply to power a network equipment according to the POE standard or IEEE 802.3af standard.
